# EUROPÄISCHE PATENTSCHRIFT

(11) **EP 0 606 291 B1**
(45) Veröffentlichungstag und Bekanntmachung des Hinweises auf die Patenterteilung: **24.04.1996**
(21) Anmeldenummer: 92920162.2
(22) Anmeldetag: 21.09.1992
(51) Int. Cl.: C02F 9/00, C09B 67/54

(54) **VERFAHREN UND VORRICHTUNG ZUR RÜCKGEWINNUNG VON BESTANDTEILEN AUS FARBDISPERSIONEN**
PROCESS AND DEVICE FOR RECOVERING COMPONENTS FROM DYESTUFF DISPERSIONS
PROCEDE ET DISPOSITIF POUR LA RECUPERATION DE CONSTITUANTS PROVENANT DE DISPERSIONS DE COLORANTS

(30) Priorität: 01.10.1991 CH 2897/91
(43) Veröffentlichungstag der Anmeldung: 20.07.1994
(73) Patentinhaber: TEX-A-TEC AG, Ch-9630 Wattwil/Ulisbach (CH); Marte, Walter, CH-9631 Ulisbach (CH)
(72) Erfinder: MARTE, Walter, CH-9631 Ulisbach (CH); MEYER, Ulrich, CH-8132 Egg (CH)
(74) Vertreter: Frauenknecht, Alois J.
(86) Internationale Anmeldenummer: EP9202188
(87) Internationale Veröffentlichungsnummer: WO9307094

(56) Entgegenhaltungen:
- EP-A- 0 063 321
- DE-A- 2 323 600
- US-A- 4 724 045

## Beschreibung

Die vorliegende Erfindung betrifft ein Verfahren zur Rückgewinnung und/oder Entsorgung von Bestandteilen aus Farbdispersionen, Farblösungen und Färbepasten sowie eine Vorrichtung zur Anwendung des Verfahrens.

Die Entsorgung von Färbepasten und ihrer Rückstände erfolgte bisher oft über die örtlichen Kläranlagen, unabhängig von ihren Inhaltstoffen. Beispielsweise weist eine textile Färbepaste farbstoffgebundene Schwermetalle und diverse synthetische nicht abbaubare Verdickungsmittel auf. Dies hat dazu geführt, dass in vielen Ländern ein gesetzliches Abgabeverbot für Färbepasten und ähnliche Farblösungen an die örtlichen Abwasserreinigungsanlagen ausgesprochen wurde. Wird ferner berücksichtigt, dass in einer mittelgrossen Textildruckerei jährlich 500 bis 1000 Tonnen Färbepasten anfallen, wovon 50 bis 70% chemisch-physikalisch gebunden und somit nicht mechanisch auftrennbar sind, so ist die Tragweite der Umweltbelastung bzw. der Unmöglichkeit einer Weiterführung der Textilbetriebe basierend auf den bisherigen Technologien offensichtlich.

Ähnlich liegen die Probleme bei anderen, Farbstoffe und Farbpigmente verarbeitenden Branchen, wie beispielsweise in Lackierbetrieben der Autoindustrie. Es wurde deshalb bereits vorgeschlagen, Lackierüberschüsse durch einen Wasserentzug mittels Ultrafiltration zurückzugewinnen und dem Farbspritzen zur Wiederverwendung zuzuführen. Nachteilig bei diesem Verfahren sind die relativ hohen Anlagekosten, deren Störanfälligkeit und grosser Wartungsbedarf und zudem ihre, für jeden Anwendungszweck sehr spezifisch notwendige Ausgestaltung.

Im weiteren ist ein Verfahren zur Reinigung von rohen organischen Pigmenten bekannt (EP -A2- 0 063 321) bei dem eine Suspension aus zwei miteinander nicht vollständig mischbaren Flüssigkeiten getrennt und aus einer Phase gereinigte Rohpigmente isoliert werden. Das dort global erwähnte fraktionierte Fällen unter Zugabe von konzentrierten Säuren ist als verlustreich und unökonomisch dargestellt.

Es ist deshalb vorgesehen die verwendeten organischen Lösungsmittel durch Destillation ebenfalls zurückzugewinnen.

Aus der DE -A1- 2 323 600 ist ein Verfahren und eine Vorrichtung zur Aufbereitung von Färbereiabwässern bekannt, welche ebenfalls eine Zugabe von Säuren vorsehen und über eine Belüftung (Umrühren) ein Ausflocken bewirken. Eine anschliessende Filtrierung in einem Gas-Adsorptionsfilter erlaubt lediglich das gereinigte Wasser wieder zu verwenden.

Die Vorrichtung benutzt entsprechende Verweilbecken und Belüftungs-Rührwerke sowie Dosier und Regeleinrichtungen für die Zugabe der Säuren sowie Druckkessel mit Adsorptionsmittel.

Es ist Aufgabe der Erfindung, ein Verfahren zu schaffen, welches möglichst universell anwendbar ist und welches die Recyclierung von wertvollen und/oder umweltbelastenden Rohstoffen ermöglicht.

Es ist ebenfalls Gegenstand der Erfindung, eine geeignete Vorrichtung zur Anwendung des Verfahrens zu schaffen, welche wirtschaftlich aufbaubar und betreibbar ist.

Die vorgenannte Aufgabe wird dadurch gelöst, dass in einem ersten Verfahrensschritt der aufzuarbeitenden Masse so lange ein Lösungsmittel und/oder eine Base oder eine Säure, unter ständigem Rühren zugeführt werden, wobei gleichzeitig die Viskosität und/oder der pH-Wert der Lösung überwacht werden bis ein vorgegebener Wert, welcher eine Mischungslücke mit wenigstens zwei Phasen charakterisiert, erreicht ist, dass in einem zweiten Verfahrensschritt die Zufuhr des Lösungsmittels und/oder der Base oder des Lösungsmittels und/oder der Säure unterbrochen wird und die Entnahme der Bestandteile erfolgt.

Die Vorrichtung zur Anwendung des Verfahrens ist dadurch charakterisiert, dass an ein Reaktionsgefäss wenigstens eine Dosiervorrichtung angeschlossen ist, dass im Reaktorgefäss, mit darin angeordneten Rührwerk und Messgeräten zur Messung des pH-Wertes und der Viskosität, welche Geräte zur Beobachtung einer Mischungslücke vorgesehen sind, und dass eine Zentrifuge und/oder eine Filterpresse für die mechanische Trennung der Feststoffe von der Flüssigphase diesem Reaktorgefäss nachgeschaltet sind.

Ein besonderer Vorteil der erfindungsgemässen Vorrichtung ist ihre Einfachheit und die Möglichkeit, bestehende oder einfach zu beschaffende Betriebsmittel zu verwenden.

Das in Anspruch 2 beschriebene Verfahren ist besonders einfach, zuverlässig und flexibel anwendbar. Es ist vorallem für einen Batchbetrieb geeignet und erfordert keine teuren Messgeräte, insbesondere weil die Mischungslücke auch bei variablen Konzentrationen der Inhaltstoffe relativ breit und somit einfach einstellbar ist.

Das in Anspruch 3 aufgeführte Verfahren erlaubt eine sehr einfache Rückführung der Lösungsmittel und eine Trennung der Feststoffe von der Lösung.

In einfachen Fällen reicht die in Anspruch 4 vorgesehene Zugabe von mit Wasser mischbarem Lösungsmittel oder von Wasser allein um eine Mischungslücke zu erzeugen.

Weitere zur Erzeugung einer Mischungslücke geeignete, allgemein zugängliche Lösungsmittel sind in Anspruch 5 aufgeführt.

Besonders vorteilhaft ist eine ergänzende Zugabe von Säuren oder Basen, die mit den aufzuarbeitenden sauren oder basischen Lösungen eine Pufferlösung bilden, welche zur Stabilisierung der Mischungslücke dient, vgl. Anspruch 6.

Die Vorrichtung nach Anspruch 8 ist besonders effizient und erlaubt eine platzsparende Konstruktion der Anlage.

Die Verwendung von Kugeln gemäss Anspruch 9, insbesondere von Metallkugeln im Reaktorgefäss, ergibt eine "Mahl-Wirkung", bei geringem apparativem Aufwand und somit eine hohe Extraktionsrate.

Das Verfahren eignet sich besonders zur einfachen Recyclierung der Polymere (Acrylate) von Schlichteflotten in der Garnverarbeitung, da diese eine makromolekulare Ähnlichkeit zu den Färbepastepolymeren aufweisen.

In nachfolgenden Zeichnungen sind erfindungsgemässe Ausführungen vereinfacht und beispielhaft veranschaulicht.

Es zeigen:
- Fig. 1: Eine Anlage zur Rückgewinnung und/oder Entsorgung von aufzuarbeitenden Massen mit einer in einem Reaktorgefäss integrierten Zerkleinerungsvorrichtung,
- Fig. 2: eine erste Variante der Anlage Fig. 1 mit im Reaktorgefäss eingebauten Ultraschallgebern und mit einem Dekanter und einem Extraktor,
- Fig. 3: eine zweite Variante der Anlage Fig. 1 und
- Fig. 4: eine dritte Variante der Anlage Fig. 1 mit einer Filterpresse.

In sämtlichen Figuren sind gleiche Funktionsteile mit gleichen Bezugsziffern versehen.

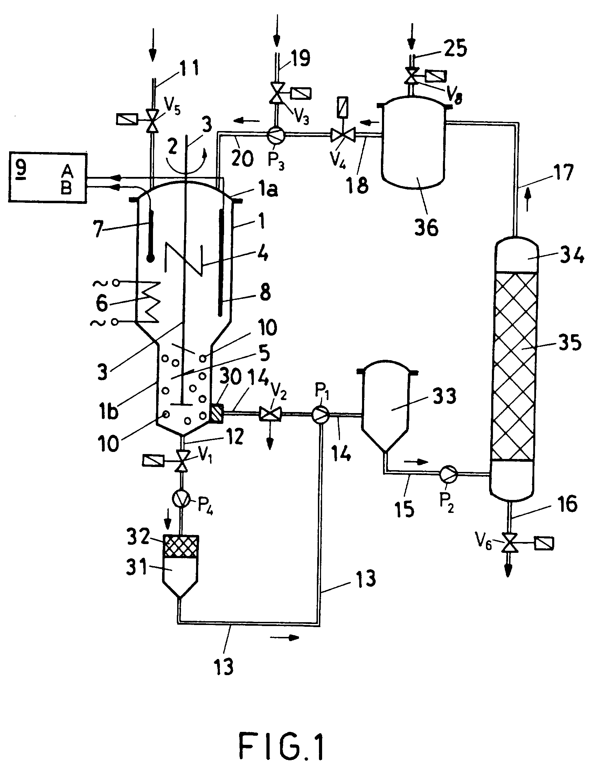

In Fig. 1 ist mit 1 ein an sich bekanntes Reaktorgefäss bezeichnet. Dieses Gefäss 1 ist mit einem Rührwerk 2 ausgestattet, welches einen oberen Rührwerkflügel 4 und untere Rührwerkflügel 5, auf derselben Achse 3 angeordnet, aufweist. Zudem ist im Reaktorgefäss 1 eine pH-Messelektrode 7 und ein Rotationsviskosimeter 8 vorgesehen. Die Signalausgänge beider Geräte sind über einen Deckel la auf die Eingänge A und B eines Darstellungsgerätes 9 zugeführt. Im weiteren befindet sich im Reaktiongefäss 1 ein durch einen Wechselstrom gespiesenes Heizelement 6. Der untere Teil des Reaktorgefässes 1 weist eine Verjüngung 1b auf und ist mit Kugeln 10 aus nicht rostendem Stahl von 2-10 mm Durchmesser beladen. In den abnehmbaren Deckel la führen zwei Leitungen 11 und 20, wobei sich in der Leitung 11 ein elektrisch angesteuertes Ventil V₅ befindet. Im Boden des Reaktorgefässes 1 ist eine Rohrleitung 12 eingesetzt, welche über ein weiteres Ventil v₁ und eine Pumpe P₄ an eine Filtereinheit 31 angeschlossen ist. Deren Ausgang ist mit einer weiteren Rohrleitung 13 zu einem Eingang einer Pumpe P₁ geführt, welche ihrerseits über deren zweiten Eingang mit einer in der Verjüngung 1b eingelassenen Filterplatte 30 und einer Rohrleitung 14 mit einem Ventil V₂ verbunden ist. Der Ausgang dieser Pumpe P₁ ist mit der weitergeführten Rohrleitung 14 mit einem Speicherbehälter 33 verbunden. Am unteren Teil des Speicherbehälters befindet sich eine Rohrleitung 15 in der eine weitere Pumpe P₂ zwischengeschaltet und zum Eingang einer Destillationskolonne 34 geführt ist. Die Destillationskolonne 34 weist eine mit einem Ventil V₆ verbundene Ableitung 16 auf. Das in der Kolonne 34 über Schikanen 35 geleitete Destillat ist über eine Ableitung 17 zu einem Speichertank 36 geführt. Dieser weist eine Zuleitung 25 und ein Ventil V₈ auf und ist seinerseits mit einer tiefer liegenden Leitung 18 über ein Ventil V₄ zu einer Pumpe P₃ geführt. Diese ist über ihren zweiten Eingang mit einer Leitung 19 und einer durch ein Ventil V₃ gesteuerten Wasserzufuhr verbunden. Der Ausgang der Pumpe P₃ mündet über die Leitung 20 in den Deckel 1a des Reaktorgefässes 1.

Sämtliche verwendeten Bauelemente und Hilfsgeräte sind handelsüblich; so ist das Darstellungsgerät 9 ein 2-Kanal Plotter, der beispielsweise durch ein Kathodenstrahloszilloskop ersetzbar ist.

Die Rührwerkflügel 4 sind übliche Flüssigkeits-Rührer; die Rührwerkflügel 5 sind als Feststoff-Rührer ausgebildet.

Für die Trennung, Rückgewinnung und Entsorgung der Komponenten einer Färbepaste für textile Anwendungen mit einer Zusammensetzung gemäss dem nachfolgenden Beispiel 1, hat sich die Anlage der Fig. 1 bestens bewährt.

### Beispiel 1:

### Färbepaste bestehend aus:

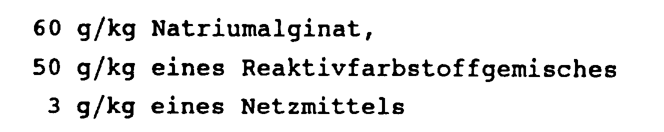

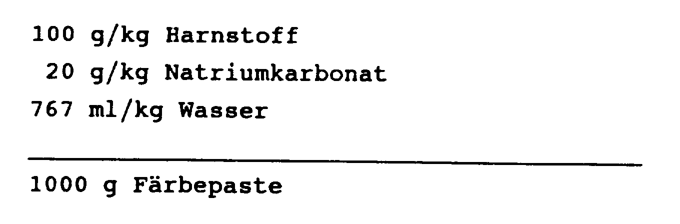

100 kg der obigen Färbepaste werden in das Reaktorgefäss 1 gegeben und mittels des Heizelementes 6 auf 30° C erwärmt. Anschliessend wird ein Lösungsmittelgemisch bestehend aus 50% Aceton und 50% Ethanol mit einer Dosierrate von 2 l/min aus dem Lösungsmittelspeichertank 36 über das Ventil V₄ und die Pumpe P₃ unter ständigem Rühren mittels dem Rührer 2 der Paste zugemischt. Gesamthaft werden 25% des ursprünglichen Pastenvolumens, d.h. 25 kg des Lösungsmittelgemisches zudosiert. Die Viskosität der Lösung wird, während des Rührens, in an sich bekannter Weise mit dem Viskosimeter 8 kontinuierlich gemessen und auf dem Darstellungsgerät 9 registriert. Dabei kann über ein weites Zeitintervall eine stetige Änderung des Viskositätsverlaufs festgestellt werden. Nimmt die Viskosität sprunghaft ab, so hat sich eine Mischungslücke eingestellt, worauf die Zufuhr des Lösungsmittels manuell oder automatisch unterbrochen wird. Beim Erreichen der Mischungslücke, sinken die Feststoffe der Färbepaste zum Boden des Reaktorgefäss, d.h. zum Boden des verjüngten Teils 1b, in dem sich die Metallkugeln 10 befinden. Nach abgeschlossener Flockung des Natriumalginats wird die flüssige Phase des Mischungslücke-Gemisches durch eine am Boden des Reaktorgefässes la befindliche und mit einer Filterplatte 30 und dem Ventil V₂ versehenen Leitung 14 bis auf ein Restvolumen von 10% des Gesamtvolumens mit der Pumpe P₁ in den Behälter 33 abgepumpt.

Das im Reaktorgefäss 1 verbleibende Gemisch, welches auch den gesamten geflockten Natriumalginatanteil enthält, befindet sich im verjüngtem Bereich 1b, mit den Kugeln 10. Für die weitere Extraktion der geflockten Feststoffe wird nun ein Lösungsmittelgemisch bestehend aus 40% Wasser über die Leitung 19 und das Ventil V₃ sowie 30% Ethanol und 30% Aceton aus dem Speichertank 36 über die Leitung 18 und das Ventil V₄ in der Pumpe P₃ gemischt und über die Leitung 20 in das Reaktorgefäss 1 gefördert, mit einer Dosierrate von 1,5 l/min. Dieses Lösungsmittelgemisch wird auf das mit Rührwerkflügel 5 mit 120 U/min gerührte Kugelpaket 10 gesprüht. Die Feststoffe, d.h. der gesamte geflockte Verdicker und die Restfarbstoffe befinden sich jetzt im unteren Teil des Reaktorgefässes 1b.

Der kontinuierlich aus dem Reaktionsgefäss über die Leitung 14 und das Ventil V₂ abgezogene Volumenstrom gleicht dem Zulaufstrom über die Leitung 20, also ebenfalls 1,5 l/min. Dieser Extrakt bzw. Eluat gelangt über die Pumpe P₁ in den Speicherbehälter 33 und von dort über die Leitung 15 und die Pumpe P₂ in die Destillationskolonne 34.

Nach einer Extraktion (Elution) von 20 min Dauer wird der gesamte restliche Inhalt des Reaktorgefässes 1 über die Leitung 12, das Ventil V₁ und die Pumpe P₄ in die Filtereinheit 31 abgezogen und filtriert. Besonders geeignet hat sich ein 5 µm Filter der Firma Esters-Filter Technik, D-5100 Aachen.

Der trockene Filterkuchen 32 besteht zu über 95% aus Natriumalginat und wird der Färbepastenproduktion wieder zugeführt.

Der in der Destillationsanlage 34 anfallende Rückstand gelangt über die Leitung 16 und das Ventil V₆ in die Entsorgung für nicht recyclierbare Stoffe. Dies sind beispielsweise schwermetallhaltige Farbstoffe. Dieser Rückstand wird durch eine Fällung mit Eisen- oder Aluminiumsalzen in einen Schlamm überführt und nach dessen Entwässerung deponiert.

### Beispiel 2:

### Färbepaste bestehend aus:

| | |
|---|---|
| 55 g/kg | Natrium-Polyacrylat, |
| 35 g/kg | eines Reaktivfarbstoffgemisches |
| 3 g/kg | eines Netzmittels |
| 70 g/kg | Harnstoff |
| 30 g/kg | Natriumbikarbonat |
| 807 ml/kg | Wasser |
| 1000 g | Färbepaste |

100 kg der obigen Färbepaste werden in den mit Rührer 2 und an sich bekannter pH-Mess-Apparatur 7 versehenen Reaktorgefäss 1, vgl. Fig. 1, gegeben. Die Färbepastemischung wird nun mit dem Heizelement 6 auf eine Temperatur von 20 bis 25° C gebracht. Anschliessend werden 10 Liter einer wässrigen 10%-igen Schwefelsäurelösung aus der Leitung 11, über das Ventil V₅ mit einer Dosierrate von 0,6 l/min, bis ein pH-Wert von 3 erreicht wird, zugegeben. Nach Beendigung der Säuredosierung liegt das Polyacrylat geflockt als Polyacrylsäure vor.

Die Flüssigphase wird über die Filterplatte 30, die Leitung 14, das Ventil V₂ und die Pumpe P₁ in den Speichertank 33 abgezogen und der Destillationskolonne 34 zugeführt.

Zur weiteren Extraktion der geflockten Polyacrylsäure wird dem im verjüngten Teil 1b verbliebenen Polyacrylat 20 Liter einer Extraktionslösung zudosiert. Dabei werden 1 Liter einer 10%-igen Schwefelsäure über die Leitung 11, das Ventil V₅ dem Reaktorgefäss 1 zugeführt. Gleichzeitig werden 14 Liter Wasser aus der Leitung 19 über das Ventil V₃ sowie 15 Liter Ethanol aus dem Speichertank 36 über die Leitung 18 und das Ventil V₄ zudosiert. Das Ethanol und das Wasser werden in der Pumpe P₃ zusammengemischt und über die Leitung 20 in das Reaktorgefäss 1 geleitet. Der Inhalt des Reaktionsgefässes 1 wird nun während 15 min bei 60°C intensiv mit dem Rührer 2 resp. mit den Rührwerkflügeln 5 gerührt. Nach 15 min wird die Flüssigphase über die Filterplatte 30, über die Leitung 14 und die Pumpe P₁ in den Speicherbehälter 33 abgezogen.

Dieses Vorgehen wird zweimal wiederholt. Nach Abschluss der vierten Extraktionsphase wird der gesamte Inhalt des Reaktorgefässes 1 über die Filtereinheit 31 geführt, wobei das Filtrat wieder in den Speicherbehälter 33 zugeleitet wird.

Die abfiltrierte Polyacrylsäure - der Filterkuchen 32 - wird mit Wasser und 10%-ige Natronlauge versetzt, um die Polyacrylsäure wieder in ihr Natriumsalz zu überführen. Das Polyacrylsäurenatriumsalz wird als Verdickungsmittel zur Färbepastenherstellung wiederverwendet.

Der Destillationsrückstand aus der Destillationskolonne 34 wird über die Leitung 16 abgelassen und analog dem Beispiel 1 entsorgt.

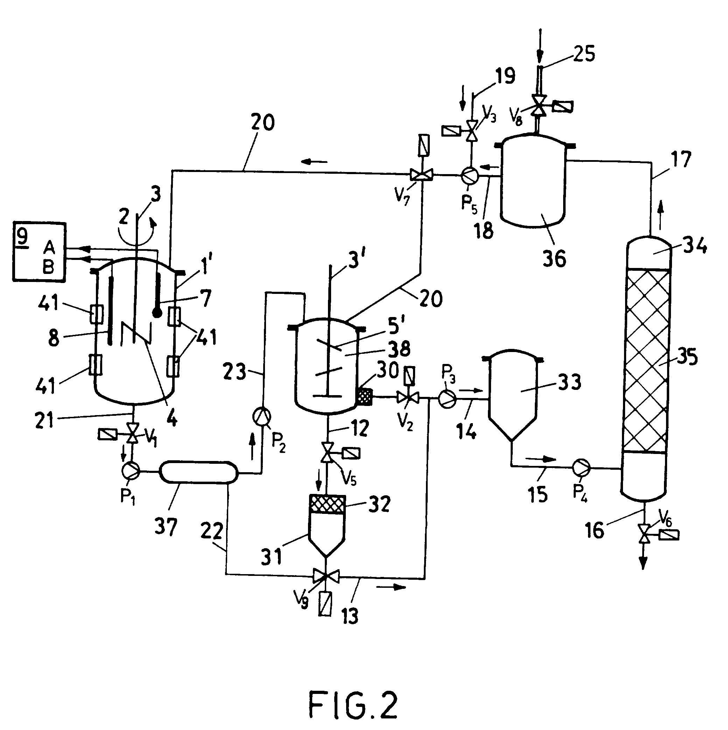

Aus zeichnerischen Gründen sind in den nachfolgenden Fig. 2 bis 4 die Rohrleitungen als einfache Linien dargestellt.

Die Variante Fig. 2 der vorgängig beschriebenen Anlage dient hauptsächlich für die Rückgewinnung von Färbepasten aus Farblösungen.

Grundsätzlich basiert die Anlage gemäss Fig. 2 auf den gleichen chemisch-technischen Verfahrensschritten wie diejenige nach Fig. 1.

Das in Fig. 2 dargestellte Reaktorgefäss 1' weist an seinem Mantel vier Ultraschallgeber 41 auf, welche der mechanischen Zerkleinerung der Färbepaste bzw. der Farbpartikel dienen. Eine Gemischableitung 21 ist über ein Ventil V₁, eine Pumpe P₁ zu einem Dekanter 37 mit einer hier vorhandenen Ableitung 22 für die Flüssigphase geführt. Der zweite Ausgang des Dekanters 37 führt über seine Leitung 23 mit der Pumpe P₂ eine Polymerphase einem Extraktor 38 zu, der auf seiner Rührwerkachse 3' für Feststoffe geeignete Rührflügel 5' aufweist. Die Lösungsmittelzufuhr erfolgt hier über die Leitung 20 in den Extraktor 38. Die Feststoffableitung 12 erfolgt ebenfalls am Extraktor 38 und ist in gleicher Weise aufgebaut wie in Fig. 1.

### Beispiel 3:

Lösung einer Färbepaste bestehend aus gesammelten Resten von Färbepasten aus dem Wollätzdruck mit der folgenden Zusammensetzung:

| | |
|---|---|
| 70 g/kg | Carboxyliertes Guar |
| 65 g/kg | Farbstoffgemisch |
| 3 g/kg | Setamol WS |
| 30 g/kg | Harnstoff |
| 50 g/kg | Glyecin A |
| 100 g/kg | Rongalit C |
| 2 g/kg | Tensid |
| 680 ml/kg | Wasser |
| 1000 g | Färbepaste |

100 kg werden dem Reaktionsbehälter 1', vgl. Fig. 2, zugeführt. Es werden 20 kg Ethanol aus dem Speichertank 36 über die Leitung 18, die Pumpe P₅, 3-Wegventil V₇ und die Leitung 20 in das Reaktorgefäss 1' der Färbepaste zugegeben. Dies führt zur Flockung des Guarderivates im Reaktorgefäss 1'. Während der Lösungsmittelzudosierung wird das Gemisch mit 160 U/min gerührt und mit einer Ultraschall-Leistung von 80 Watt bei einer Frequenz von 20 kHz beschallt. Die Viskosität der Lösung wird mit dem Rotationsviskosimeter 8 gemessen und auf dem Darstellungsgerät 9 stetig verfolgt. Eine markante Änderung im Viskositätswert zeigt das Erreichen der Mischungslücke an. Danach wird das gesamte Gemisch über die Leitung 21, das Ventil V₁ und die Pumpe P₁ dem Dekanter 37 zugeführt. Im Dekanter 37 werden die Flüssig- und Feststoff-phasen voneinander getrennt und die die Farbstoffe enthaltende Flüssigphase über den Auslauf 22 und die Leitungen 13, 14 und 15 zur Destillation geführt.

Die Polymerphase mit den darin verbliebenen Farbstoffen wird mit der restlichen Flüssigphase von der Pumpe P₂ über die Leitung 23 in den Extraktor 38 gefördert. Die weitere Extraktion des in der Polymerphase verbliebenen Farbstoffes erfolgt im Extraktor 38.

Die Extraktion wird kontinuierlich durchgeführt, indem ein Lösungsmittelgemisch aus dem Speichertank 36 über die Leitung 18, die Pumpe P₅ und das 3-Wegventil V₇ in der Leitung 20 dem Extraktor 38 zugeführt wird. Diese Extraktionslösung besteht aus 40% Wasser und 60% Ethanol; über die Leitung 19 und das Ventil V₃, mit dem Ethanol in der Pumpe P₅ gemischt. Die Rate für die Dosierung des Lösungsmittelgemisches in das Reaktorgefäss 1' beträgt hier 1,5 l/min.

Das Farbstoffe enthaltende Lösungsmittelgemisch wird analog dem Beispiel 1 über das Filter 30, das Ventil V₂ und die Pumpe P₃ über die Leitung 14 in den Speichertank 33 geführt. Aus dem Speicherbehälter 33 wird der Extrakt über die Leitung 15, die Pumpe P₄ in die Destillationskolonne 34 gefördert. Der Rückstand der Destillation enthält die schwermetallhaltige, wässrige Farbstofflösung, welche durch eine Flockung und Verfestigung des dabei entstehenden Schlammes entsorgt werden kann.

Nach erfolgter Extraktion während 30 min wird der Inhalt des Extraktors 38 über die Leitung 12 und Ventil V₅ durch die Filtereinheit 31 gepumpt. Das verdickerfreie Lösungsmittelgemisch wird über die Leitung 13 und die Pumpe P₃ in den Speicherbehälter 33 gefördert und von hier wieder in die Destillationskolonne 34 gepumpt.

Der schwermetallfreie Verdicker, der als Filterkuchen 32 zurückbleibt, kann einer biologischen Entsorgung oder der Wiederverwertung zugeführt werden.

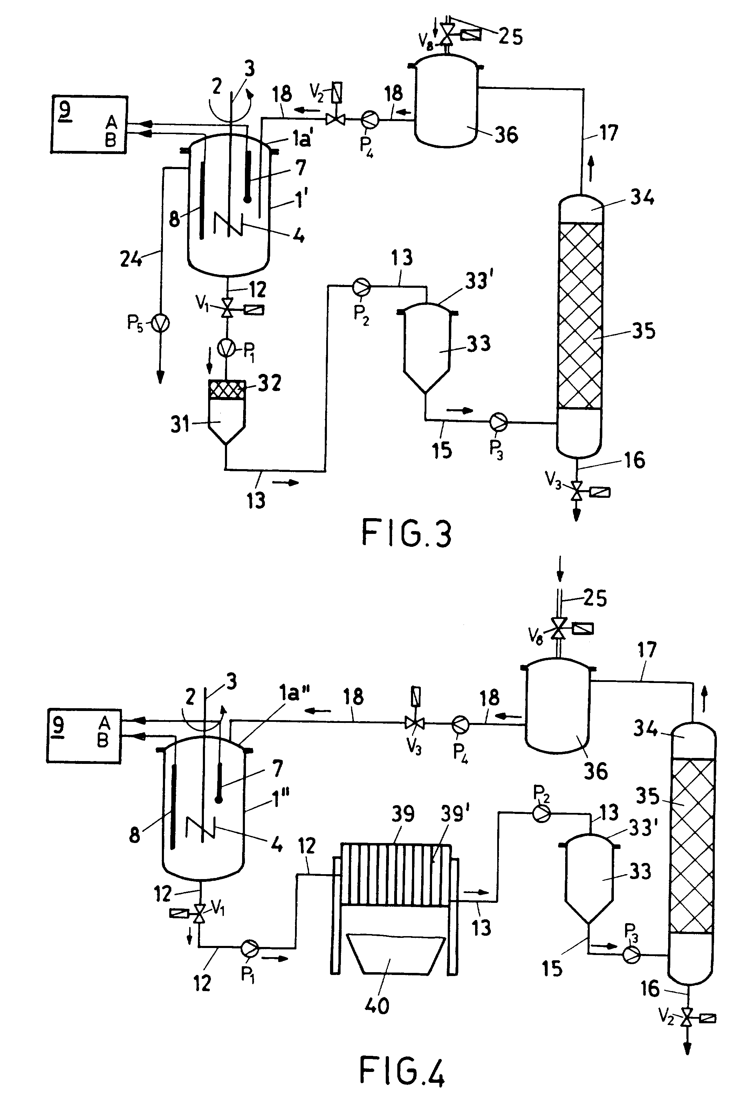

Die zweite Variante gemäss Fig. 3 basiert weitgehend auf der Anlage gemäss Fig. 1. Das Reaktorgefäss 1' weist in seinem oberen Teil eine seitliche Leitung 24 mit angeschlossener Pumpe P₅ auf. Hier fallen der Dekanter und der Extraktor weg. Dementsprechend ist die Filtratableitung 13 direkt zu einer Pumpe P₂ geführt, welche das Filtrat über den Deckel 33' in den Speicherbehälter 33 einleitet.

### Beispiel 4:

Gemisch verschiedener Pigment-Färbepasten aus der Textil-oder Papierindustrie bestehend aus:

| | |
|---|---|
| 5-15 g/kg | Farbstoff |
| 200 g/kg | Binder (Gemisch aus Polyacrylat, Polybutadien und Dispergatoren) |
| 800 ml/kg | Wasser |
| 1000 g | Färbepaste |

100 kg gesammelte Resten von Färbepasten werden dem Reaktionsgefäss 1', vgl. Fig. 3, zugeführt und mit dem Rührer 2 gerührt. Anschliessend erfolgt die Zudosierung eines Lösungsmittels bestehend aus 100% Iso-Propanol. Die Zudosierung von 1 l/min während 20 min erfolgt über die Leitung 18 und das Ventil V₂ aus dem Speichertank 36.

Nach abgeschlossener Lösungsmitteldosierung, d.h. beim Erreichen der Mischungslücke, wie in den vorherigen Beispielen erläutert, wird die Rührung abgestellt und das System trennt sich in zwei Phasen, wobei sich die Feststoffe gemäss ihren spezifischen Gewichten auftrennen.

Die oberste Schicht enthält die gesamte Farbstoff-Fracht mit dem Hauptteil der anwesenden Tenside und kann mittels der seitlichen Leitung 24 und der Pumpe P₂ abgesaugt und einer adäquaten Entsorgung analog Beispiel 1 zugeführt werden.

Die noch im Reaktorgefäss verbleibenden Phasen, nämlich die weitgehend klare, wässrige Lösungsmittel enthaltende Phase und die aus farbstoffreiem Verdickungsmittel bestehende Feststoffphase, werden gemeinsam über die Leitung 12, das Ventil V₁ und die Pumpe P₁ in die Filtereinheit 31 gefördert.

Das Filtrat gelangt über die Leitung 13 und Pumpe P₂ in den Speichertank 33 und von hier über die Leitung 15 und die Pumpe P₃ in die Destillation 34 zur Rückgewinnung des Lösungsmittels. Der geflockte Verdicker wird der Filtereinheit 31 in Form von Filterkuchen 32 entnommen und problemlos einer Hausmülldeponie zugeführt, da er nun frei von schwermetallhaltigen Farbstoffen ist.

Der Destillationsrückstand wird über die Leitung 16 abgezogen und kann über Ventil V₃ direkt der Abwasseraufbereitungsanlage zugeführt werden, da er keine weiteren toxischen Inhaltsstoffe enthält.

Die dritte Variante der Anlage Fig. 1 weist gemäss Fig. 4 eine Feststoffableitung vom Reaktorgefäss 1" auf, welche über das Ventil V₁, eine Pumpe P₁ zu einer Filterpresse 39 geführt ist. Die Filtratableitung 13 dieser Presse 39 ist über eine Pumpe P₂ als Leitung 13 über den Deckel 33' in den Speicherbehälter 33 geführt. Unterhalb der Filterpresse 39 befindet sich ein auswechselbarer Speicher 40 für die Feststoffe.

### Beispiel 5:

100 kg gesammelte Restbestände von Anstrichfarben bestehend aus wässrigen Dispersionen von Farbstoffpigmenten, Dispergatoren und Bindemittel werden in das Reaktionsgefäss 1" der Anlage, Fig. 4, gefüllt. Anschliessend erfolgt unter ständigem Rühren mit dem Rührer 2 die Zudosierung von 40 Liter Aceton aus dem Speichertank 36 über die Leitung 18, die Pumpe P₄ und das Ventil V₃.

Nach einer Rührzeit von ca. 20 min wird die Mischungslücke erreicht und das entmischte Gemisch über die Leitung 12, das Ventil V₁ und die Pumpe P₁ in die Filterpresse 39 gepumpt.

Die abgetrennte Flüssigphase 13 wird dem Speichertank 33 zugeführt und von hier zur Destillationskolonne 34 zur Recyclierung des Lösungsmittels mit der Pumpe P₃ gefördert.

Das Destillat gelangt wieder in den Speichertank 36 während die Destillationsrückstände über die Leitung 16 einer Abwasseraufbereitungsanlage zugeführt werden. Der Filterkuchen 39' besteht zu 40 % aus Farbpigmenten und zu 60 % aus Wasser. Er gelangt in den Speicher 40 und kann in Form von Platten einer Deponie oder einer weiteren Verfestigung und/oder Verbrennung zugeführt werden.

In den vorangehenden Beispielen kann je nach Art der ausflockenden Feststoffe ein Tellerseparator, eine Kerzenfiltration oder eine Querfiltration für die Trennung Einsatz finden.

## Patentansprüche

1. Verfahren zur Rückgewinnung und/oder Entsorgung von Bestandteilen aus Farbdispersionen, Farblösungen, Färbepasten und Schlichteflotten, dadurch gekennzeichnet, dass in einem ersten Verfahrensschritt der aufzuarbeitenden Masse so lange ein Lösungsmittel und/oder eine Base oder eine Säure, unter ständigem Rühren zugeführt werden, wobei gleichzeitig die Viskosität und/oder der pH-Wert der Lösung überwacht werden bis ein vorgegebener Wert, welcher eine Mischungslücke mit wenigstens zwei Phasen charakterisiert, erreicht ist, dass in einem zweiten Verfahrensschritt die Zufuhr des Lösungsmittels und/oder der Base oder des Lösungsmittels und/oder der Säure unterbrochen wird und die Entnahme der Bestandteile erfolgt.

2. Verfahren nach Anspruch 1, dadurch gekennzeichnet, dass ein Labormassstab-Aliquot der aufzuarbeitenden Lösung ständig gerührt wird, wobei gleichzeitig die Viskosität und/oder der pH-Wert der Lösung überwacht werden bis ein Wert, welcher eine Mischungslücke charakterisiert, erreicht ist, worauf die zuführende Menge des Lösungsmittels und/oder der Base oder des Lösungsmittels und/oder der Säure umgerechnet, auf die im Verfahren aufzuarbeitende Masse beigegeben werden.

3. Verfahren nach den Ansprüchen 1 und 2, dadurch gekennzeichnet, dass
- in einem zweiten Verfahrensschritt, vom, die Mischungslücke aufweisenden, Gemisch mittels einer mechanischen Trennung wenigstens die Feststoffphase getrennt wird,
- in einem dritten Verfahrensschritt das Lösungsmittel der flüssigen Phase abgezogen wird,
- in einem vierten Verfahrensschritt die abgetrennte Feststoffphase zerkleinert und unter weiterer Zerkleinerung mittels eines weiteren Lösungsmittels oder Lösungsmittelgemisches so lange extrahiert wird, bis die Feststoffe wieder verwertbar sind,
- in einem fünften Verfahrensschritt der aus der Feststoffphase gewonnene Extrakt destilliert, das Destillat zur Extraktion zurückgeführt und der Rückstand aus der Destillation abgesondert wird.

4. Verfahren nach Anspruch 1, dadurch gekennzeichnet, dass ein Lösungsmittel bestehend aus Wasser und/oder aus einem organischen, mit Wasser mischbaren, weiteren Lösungsmittel der aufzuarbeitenden Lösung zugeführt wird.

5. Verfahren nach Anspruch 4, dadurch gekennzeichnet, dass die organischen Lösungsmittel C₁ - C₄ Alkohole, oder niedermolekulare Ketone, oder substituierte Glykole, oder wasserlösliche Amide, oder wasserlösliche Sulfat-und/oder Phosphatderivate organischer Lösungsmittel oder heterozyklische Aromaten, oder Pyridin, oder Acetonitril, oder Dimethylsulfoxid sind.

6. Verfahren nach Anspruch 1, dadurch gekennzeichnet, dass zur Einstellung des pH-Wertes eine Säure oder Base zugeführt wird, welche mit wenigstens einer der Komponenten der aufzuarbeitenden Lösung ein pH-Puffersystem bildet.

7. Vorrichtung zur Anwendung des Verfahrens nach den Ansprüchen 1 bis 6, dadurch gekennzeichnet, dass an ein Reaktionsgefäss (1) wenigstens eine Dosiervorrichtung (V₂ - V₇, P₃ - P₅) angeschlossen ist, dass im Reaktorgefäss (1), mit darin angeordneten Rührwerk (2) und Messgeräten (7, 8) zur Messung des pH-Wertes und der Viskosität, welche Geräte zur Beobachtung einer Mischungslücke vorgesehen sind, und dass eine Zentrifuge (31) und/oder eine Filterpresse (39) für die mechanische Trennung der Feststoffe von der Flüssigphase diesem Reaktorgefäss (1) nachgeschaltet sind.

8. Vorrichtung nach Anspruch 7, dadurch gekennzeichnet, dass Ultraschallgeber (41) für die Zerkleinerung und Durchmischung der Feststoffe im Reaktorgefäss (1) vorgesehen sind.

9. Vorrichtung nach Anspruch 8, dadurch gekennzeichnet, dass für die Zerkleinerung und Durchmischung der Feststoffe im Reaktorgefäss (1) Kugeln eingebracht sind.

## Claims

1. A process for the recovery and/or removal of constituents from dye dispersions, dye solutions, dye pastes and sizing baths, characterised in that, in a first process step, a solvent and/or a base or an acid are added to the mass to be reworked, stirring continuously, the viscosity and/or the pH value of the solution simultaneously being monitored, until a predetermined value, which characterises a miscibility gap with at least two phases, is reached, and in that, in a second process step, the supply of the solvent and/or the base or of the solvent and/or the acid is interrupted and the removal of the constituents takes place.

2. A process according to claim 1, characterised in that a laboratory scale aliquot of the solution to be reworked is continuously stirred, and the viscosity and/or the pH value of the solution are simultaneously monitored, until a value, which characterises a miscibility gap, is reached, on the basis of which the quantity of the solvent and/or the base or of the solvent and/or the acid to be supplied is calculated and added to the mass to be reworked in this process.

3. A process according to claims 1 and 2, characterised in that
- in a second process step, at least the solid phase is separated from the mixture having the miscibility gap by means of mechanical separation,
- in a third process step, the solvent is drawn off from the liquid phase,
- in a fourth process step, the separated solid phase is comminuted and, while being comminuted further, is extracted by means of a further solvent or solvent mixture until the solids are reusable,
- in a fifth process step, the extract recovered from the solid phase is distilled, the distillate is fed back for extraction and the distillation residue is separated off.

4. A process according to claim 1, characterised in that a solvent, comprising water and/or a further, organic solvent miscible with water, is added to the solution to be reworked.

5. A process according to claim 4, characterised in that the organic solvents are C₁ -C₄ alcohols or low-molecular ketones or substituted glycols or water-soluble amides or water-soluble sulphate and/or phosphate derivatives of organic solvents or heterocyclic aromatics or pyridine or acetonitrile or dimethyl sulphoxide.

6. A process according to claim 1, characterised in that, to adjust the pH value, an acid or base is added which forms a pH buffer system with at least one of the components of the solution to be reworked.

7. A device for applying the process according to claims 1 to 6, characterised in that at least one dosing device (V₂ - V₇, P₃ - P₅) is connected to a reaction vessel (1), in that the reaction vessel (1) ) is provided with an agitator (2) and measuring instruments (7, 8) for measuring the pH value and the viscosity, the instruments being provided for detecting a miscibility gap, and in that a centrifuge (31) and/or a filter press (39) are connected downstream of the said reaction vessel (1) ) for the mechanical separation of the solids from the liquid phase.

8. A device according to claim 7, characterised in that ultrasonic transmitters (41) are provided in the reaction vessel (1) for comminuting and mixing the solids.

9. A device according to claim 8, characterised in that pellets are placed in the reaction vessel (1) for comminuting and mixing the solids.

## Revendications

1. Procédé de récupération et/ou d'élimination de constituants de dispersions colorantes, solutions colorantes, pâtes tinctoriales et bains d'encollage, caractérisé en ce que, dans une première phase du procédé, un solvant et/ou une base ou un acide sont envoyés dans la masse à traiter, avec une agitation constante, la viscosité et/ou le pH de la solution étant simultanément contrôlés, jusqu'à ce qu'une valeur prédéfinie, caractérisant une lacune de miscibilité avec deux phases, au moins, soit obtenue, et en ce que, dans une deuxième phase du procédé, l'arrivée du solvant et/ou de la base ou du solvant et/ou de l'acide est interrompue, et les constituants sont soutirés.

2. Procédé suivant la revendication 1, caractérisé en ce qu'une partie aliquote à l'échelle de laboratoire de la solution à traiter est agitée en permanence, la viscosité et/ou le pH de la solution étant simultanément contrôlés jusqu'à ce qu'une valeur, caractérisant une lacune de miscibilité, soit obtenue, après quoi la quantité d'alimentation en solvant et/ou en base ou en solvant et/ou en acide est ajoutée, convertie à la masse à traiter dans le procédé.

3. Procédé suivant les revendications 1 et 2, caractérisé en ce que
- dans une deuxième phase du procédé, la phase solide, au moins, est séparée du mélange présentant la lacune de miscibilité, au moyen d'une séparation mécanique,
- dans une troisième phase du procédé, le solvant est soutiré de la phase liquide,
- dans une quatrième phase du procédé, la phase solide séparée est broyée et extraite au moyen d'un autre solvant ou d'un mélange de solvants, avec un broyage ultérieur, jusqu'à ce que les solides soient récupérables,
- dans une cinquième phase du procédé, l'extrait obtenu à partir de la phase solide est distillé, le distillat est renvoyé en extraction, et le résidu de distillation est séparé.

4. Procédé suivant la revendication 1, caractérisé en ce qu'un solvant, composé d'eau et/ou d'un autre solvant organique, miscible à l'eau, est envoyé dans la solution à traiter.

5. Procédé suivant la revendication 4, caractérisé en ce que les solvants organiques sont des alcools en C₁ - C₄, ou des cétones à bas poids moléculaire, ou des glycols substitués, ou des amides solubles dans l'eau, ou des dérivés sulfatés et/ou phosphatés, solubles dans l'eau, de solvants organiques, ou des composés aromatiques hétérocycliques, ou de la pyridine, ou de l'acétonitrile, ou du diméthylsulfoxyde.

6. Procédé suivant la revendication 1, caractérisé en ce qu'un acide ou une base, qui forme un système tampon du pH avec l'un au moins des constituants de la solution à traiter, est envoyé pour le réglage de la valeur pH.

7. Dispositif pour l'application du procédé suivant les revendications 1 à 6, caractérisé en ce qu'un dispositif de dosage (V₂ - V₇, P₃ - P₅), au moins, est raccordé à un réacteur (1), en ce que le réacteur (1) comporte un agitateur (2) et des appareils de mesure (7, 8) pour mesurer le pH et la viscosité, appareils prévus pour l'observation d'une lacune de miscibilité, et en ce qu'une centrifugeuse (31) et/ou un filtre presse (39) sont montés en aval de ce réacteur (1), pour la séparation mécanique des solides de la phase liquide.

8. Dispositif suivant la revendication 7, caractérisé en ce que des générateurs d'ultrasons (41) sont prévus pour le broyage et le mélange des solides dans le réacteur (1).

9. Dispositif suivant la revendication 8, caractérisé en ce que des billes sont introduites dans le réacteur (1) pour le broyage et le mélange des solides.
